# DEMANDE DE BREVET EUROPEEN

(11) **EP 0 527 663 A1**
(43) Date de publication de la demande: **17.02.1993**
(21) Numéro de dépôt: 92401999.5
(22) Date de dépôt: 09.07.1992
(51) Int. Cl.: B65G 19/02, B23Q 7/14

(54) **Dispositif pour déplacer des pièces d'un poste à un autre le long d'une ligne de leur traitement**

(30) Priorité: 17.07.1991 FR 9109031
(71) Demandeur: MACHINES ASSEMBLAGE AUTOMATIQUE, F-95805 Cergy Pontoise Cédex (FR)
(72) Inventeur: Chevalier, Claude, F-92390 Villeneuve la Garenne (FR); Queau, Michel, F-78230 Le Pecq (FR); Ardeley, Didier, F-78480 Verneuil Sur Seine (FR); Leuk, Philippe, F-78480 Verneuil Sur Seine (FR)
(74) Mandataire: Saint Martin, René

(57) **Abrégé**

Le dispositif comporte une piste (2) desservant les postes de la ligne, une pluralité de palettes (1) roulant sur la piste (2), la piste et les palettes comportant des moyens de guidage (4, 54, 55) coopérant les uns avec les autres, la piste étant bordée par au moins une courroie (7) d'entraînement marginale ; la palette (1) comporte sur l'un au moins de ses côtés un organe de son attelage à la courroie (7) comportant au moins un élément pesant (8, 18, 20) reposant par gravité sur la courroie (7) de sorte qu'un déplacement de cette courroie (7) par rapport à la palette (1) engendre par friction un mouvement de cet élément (8, 18, 20) pesant déclenchant l'embrayage de l'organe d'attelage de la palette (1) à la courroie (7).

## Description

La présente invention concerne la technique des transporteurs plans à géométrie adaptable appelés communément ateliers flexibles, qui sont utilisés pour desservir plusieurs postes de traitement d'une pièce ou d'un assemblage comprenant par exemple des postes de montage de composants sur une base, des postes de vérification, ces postes pouvant être automatiques ou manuels, entre un poste d'alimentation de la ligne le long de laquelle sont disposés les postes et un poste d'évacuation des pièces ou ensembles terminés.

Cette technique est déja éprouvée depuis plusieurs années et les matériels et machines mis en oeuvre sont de plusieurs types, qui cependant procèdent tous d'une même idée de base : une ligne d'assemblage (par exemple) comporte un transporteur principal en forme de boucle fermée sur lequel sont greffées des dérivations qui desservent un ou plusieurs postes spécifiques.

Les dérivations peuvent elles-mêmes constituer une boucle sur laquelle sont greffées des dérivations secondaires. Le transporteur principal permet d'orienter chaque pièce directement à la dérivation concernée, en court-circuitant celles qui ne sont pas concernées par le traitement de la pièce en cause, et constitue une boucle de recyclage au niveau de laquelle il est possible de gérer les stocks tampons et les différences entre les temps de cycle de chaque opération unitaire sur la ligne.

Les pièces ou les assemblages à traiter sont la plupart du temps placés sur des palettes de transport qui sont déplacées et guidées sur une piste fixe, en général réalisée à partir d'éléments standardisés et modulaires, ce qui permet des adaptations de la forme de la piste, soit à la configuration des lieux destinés à accueillir la ligne, soit à l'évolution des besoins et du nombre de postes installés le long de la ligne.

Dans de nombreux cas l'entraînement des palettes le long de la piste est assuré par une ou deux chaînes (galle) ou une ou deux courroies qui coopère par friction avec chaque palette. L'effort de friction est suffisamment faible pour que dans les zones d'arrêt et d'accumulation des palettes le mouvement de la chaîne ou de la courroie ne soit pas entravé.

La maitrise de l'effort d'entraînement est délicate avec ce type de matériel. La charge de la palette et l'inertie qui en résulte modifient sensiblement la qualité de la liaison entre palette et brin moteur des chaines ou courroies mises en oeuvre. Par ailleurs, le passage des angles ou des courbes demande la mise en oeuvre de dispositifs complexes de guidage et de reprise de chaque palette. Enfin la friction constante entre les organes moteurs et les palettes est une source d'usure rapide du matériel qui demande une maintenance relativement lourde.

Il existe donc un besoin non satisfait de transporteur de palettes pour atelier flexible dans lequel la liaison palette/organe moteur soit positive et aisément débrayable, afin de disposer d'un entraînement bien maitrisé des palettes et de diminuer l'usure des composants actifs d'une installation.

A cet effet, l'invention a donc pour objet un dispositif pour déplacer des pièces d'un poste à un autre le long d'une ligne de traitement de ces pièces, comportant une piste desservant les postes de la ligne, une pluralité de palettes roulant sur la piste, la piste et les palettes comportant des moyens de guidage coopérant les uns avec les autres, la piste étant bordée par au moins une courroie d'entraînement marginale, caractérisé en ce que la palette comporte sur l'un au moins de ses côtés un organe de son attelage à la courroie comportant au moins un élément pesant reposant par gravité sur la courroie de sorte qu'un déplacement de cette courroie par rapport à la palette engendre par friction un mouvement de cet élément pesant déclenchant l'embrayage de l'organe d'attelage de la palette à la courroie.

Le dispositif de l'invention n'utilise la friction entre courroie et palette que pour commander l'embrayage. La friction est donc un moyen de commande, la puissance de transmission est transmise par les moyens de l'embrayage proprement dit, qui sont les moyens de puissance de l'installation.

Dans un premier mode de réalisation l'organe d'attelage comporte à l'aplomb de l'élément pesant une surface solidaire de la palette sur laquelle glisse la courroie, l'élément pesant constituant un élément de serrage autobloquant de la courroie contre la surface solidaire de la palette.

L'élément pesant est constitué par un patin de serrage pesant reposant sur la courroie par une surface inférieure et comportant, opposée à cette surface, une pente inclinée vers le bas dans le sens de déplacement de la courroie et glissant sur une butée fixe de la palette.

Dans une variante l'élément pesant est constitué par une came de serrage circulaire articulée de manière excentrée sur la palette autour d'un axe parallèle à la surface de glissement de la courroie.

Afin de ne pas limiter l'usage d'une palette selon l'invention, celle-ci comporte par côté, deux éléments pesants disposés en opposition de manière à provoquer l'embrayage de l'attelage de la palette à la courroie dans les deux sens de déplacement de cette dernière.

Dans un autre mode préféré de réalisation de l'invention l'organe d'attelage est constitué par un levier pendulaire articulé à la palette au-dessus de la courroie avec un jeu dans le sens de la longueur du levier, ce dernier comportant, à l'opposé de son articulation, une gorge de passage de la courroie dont la face supérieure repose sur cette courroie et dont la face inférieure forme came de blocage du levier sur la courroie quand celle-ci provoque par friction sur la face supérieure le pivotement du levier.

Afin de permettre l'accumulation des palettes sur la piste sans arrêter les organes moteurs du dispositif, ce dernier comporte des organes de débrayage de la liaison courroie-palette, comprenant un poussoir en appui sur chaque élément pesant, monté à coulissement dans la palette parallèlement à la direction de la courroie et faisant saillie au-delà du bord avant de la palette, dans son sens de circulation quand l'élément pesant est maintenu déplacé par la courroie.

Une variante des moyens de débrayage de la liaison palette courroie, pour un organe d'attelage en forme de levier pendulaire réside dans le fait que la gorge de passage de la courroie est délimitée par la surface extérieure de deux galets montés à rotation freinée sur le levier pendulaire. Lors d'un arrêt de la palette, la courroie pincée dans le levier pendulaire, entraine la rotation de deux galets qui subissent un couple moteur supérieur au couple de freinage.

Enfin, également dans le mode préféré de réalisation de l'invention, la palette est sensiblement carrée et comporte un levier pendulaire au centre de chacun de ses côtés. L'entraînement de la palette peut alors passer indifféremment d'une marge à l'autre de celle-ci. La mise en place de la palette sur la piste n'a pas non plus à être préorientée.

D'autres caractéristiques et avantages de l'invention ressortiront de la description donnée ci-après de plusieurs variantes de sa réalisation.

Il sera fait référence aux dessins annexés parmi lesquels :
- les figures 1 et 2 sont des vues schématiques partielles d'un premier mode de réalisation du dispositif selon l'invention,
- la figure 3 illustre une première variante de ce mode de réalisation,
- la figure 4 est une vue relative à une seconde variante de réalisation,
- les figures 5, 6 et 7 illustrent un autre mode de réalisation de l'invention,
- les figures 8 et 9 sont deux vues d'une réalisation industrielle du dispositif,
- la figure 10 est une vue en plan d'une zone d'aiguillage et de dérivation du dispositif.

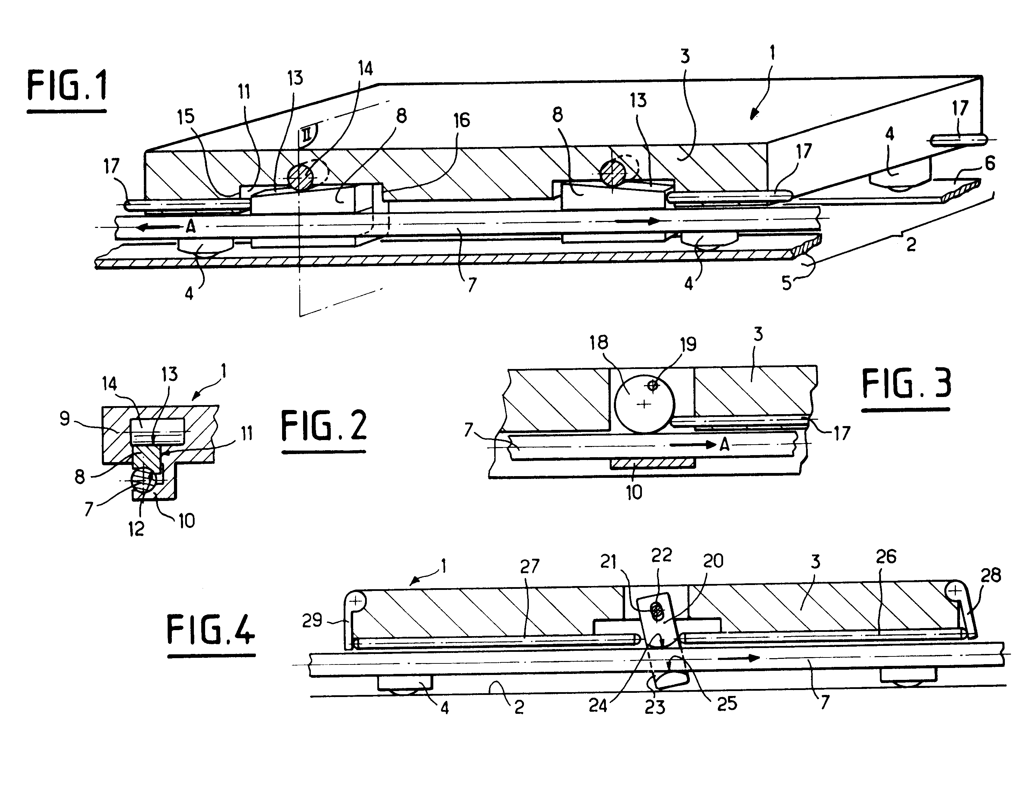

Les figures 1 à 7 illustrent divers mécanismes pour la coopération d'une palette 1 porte-pièce avec une courroie d'entraînement cylindrique. Sur ces figures, la palette 1 est représentée de manière schématique par un plateau 3 équipé d'organes de roulement 4 sur une piste 2 possèdant deux chemins de roulement 5 et 6. Cette piste appartient à une infrastructure non représentée qui comprend également des moyens de support et d'entraînement de courroies le long d'au moins un côté de la piste. La piste est ainsi bordée sur un côté ou, pour certains tronçons, sur les deux côtés d'un organe d'entrainement avec lequel chaque palette peut coopérer pour être déplacé le long de la piste qui dessert chacun des postes de traitement auxquels doit se présenter la palette. Sur les figures 1 à 7 cette courroie n'est représentée que par son brin actif 7.

La coopération de la palette 1 avec le brin de courroie 7 est réalisée, aux figures 1 et 2, au moyen de patin d'embrayage 8. Chaque côté 9 de la palette, comme représenté à la figure 2 qui est une coupe par le plan 11 de la figure 1, comporte une semelle 10 sur laquelle repose le brin de courroie 7. Le plateau 3 surplombe cette semelle et possède, à l'aplomb du brin de courroie 7, une rainure 11 dans laquelle est monté coulissant le patin 8. Ce patin repose par son propre poids sur le brin 7 et possède à cet effet une surface inférieure 12 dont le profil est en arc de cercle.

La surface supérieure 13 du patin 8 est inclinée. La rainure ou logement 11 possède en regard de cette surface 13 une pige cylindrique 14 sur laquelle la surface 13 peut porter selon sa position dans le logement 11 entre deux butées 15 et 16. Si, à la figure 1, le brin de courroie se déplace vers la gauche, selon la flèche A, il entraîne le patin 8 par friction dans la même direction qui vient former un coin entre la pige 14 et le brin 7. La palette 1 est alors attelée au brin 7 qui l'entraîne de manière positive. Cette liaison est autoverrouillée car plus l'effort exercé par la courroie sur la palette est important et plus l'effort de pincement du brin 7 entre le patin 8 et la semelle 10 est important.

Le déverrouillage ou débrayage de cette liaison peut s'opérer de deux manières. Si le trajet de la palette s'écarte de celui de la courroie, par l'effet de moyens de guidage de cette palette solidaires de la piste 5, la courroie peut échapper latéralement de la pince. La seconde façon de débrayer la liaison consiste à reculer le coin 8. Cet effet est obtenu par un poussoir 17 lorsque celui-ci est enfoncé dans la palette 1 en rencontrant une butée fixe par rapport à la piste ou une palette précédente dans une zone d'accumulation.

La palette comporte le long de chacun de ses côtés deux patins en opposition de manière à pouvoir coopérer avec une courroie quel que soit son sens de déplacement.

La variante de réalisation de la figure 3 comporte à la place de chacun des patins des figures précédentes, une came 18 constituée par un disque articulé de manière excentrée à la palette 1. L'effet de la pesanteur maintient ce disque au contact du brin de courroie 7. La distance séparant l'axe 19 d'articulation de ce disque du brin 7 de courroie est inférieure à celle séparant cet axe du bord du disque qui lui est diamètralement opposé. Ainsi lorsque la courroie est entraînée dans le sens 1, le disque 18 tend à s'engager entre le brin 7 et l'axe 19 et agit comme une came de pincement du brin contre la semelle 10. Cette came assure donc la liaison de la palette au brin de courroie 7 par coincement de ce dernier. Pour débrayer cette liaison, comme dans la réalisation précédemment décrite, un doigt poussoir 17 peut repousser le disque 18 vers l'arrière s'il est enfoncé à l'intérieur de la palette.

Le profil extérieur du disque 18 sera avantageusement de la même forme que celui des patins décrits précédemment pour permettre un échappement latéral du brin de courroie lors d'une divergence entre les trajets de la courroie et de la palette.

La figure 4 est l'illustration d'une autre variante de réalisation des moyens d'accouplement prévus entre la palette et le brin moteur de courroie. Certains des éléments déjà décrits en regard des figures précédentes portent les mêmes références. Ici la palette est équipée au centre de chacun de ses côtés d'un levier 20 pendulaire articulé à la palette au moyen d'un axe 21 fixe logé dans une lumière 22 du levier 20. A l'extrémité du levier opposée à la lumière 22 ce dernier comporte une gorge 23 ouverte latéralement et délimitée par deux surfaces supérieure 24 et inférieure 25, convexes, dont l'écartement minimum est légèrement supérieur au diamètre du brin 7 de courroie. Au repos, la courroie arrêtée et logée dans la gorge 22, le levier pendulaire repose sur le brin 7 par la surface supérieure 24 de la gorge 23, l'axe 21 étant logé du côté de l'extrémité inférieure de la lumière 22. Le déplacement de la courroie dans le sens A tend à faire pivoter le levier 20 vers la droite de la figure 4 autour de l'axe 21. La surface 25 vient alors porter sur la courroie 7. Il se produit alors une liaison entre le levier 20 et le brin de courroie 7 d'autant plus importante que l'effort exercé sur la courroie sur la palette est important.

De la même manière que précédemment, le débrayage de cette liaison s'opère soit par échappement latéral du brin 7 sortant de la gorge 23 du levier soit par action de doigts poussoirs 26, 27 actionnés depuis l'avant de la palette dans le sens de son déplacement, qui déplacent le levier vers une position verticale.

Il faut remarquer, dans cette réalisation, qu'un seul levier pendulaire convient pour l'entrainement de la palette dans deux sens opposés. Des volets 28, 29 articulés sur les bords avant de la palette offrent une surface extérieure étendue sur toute la largeur frontale de la palette pour recevoir l'effort de poussée et le transmettre au doigt poussoir correspondant.

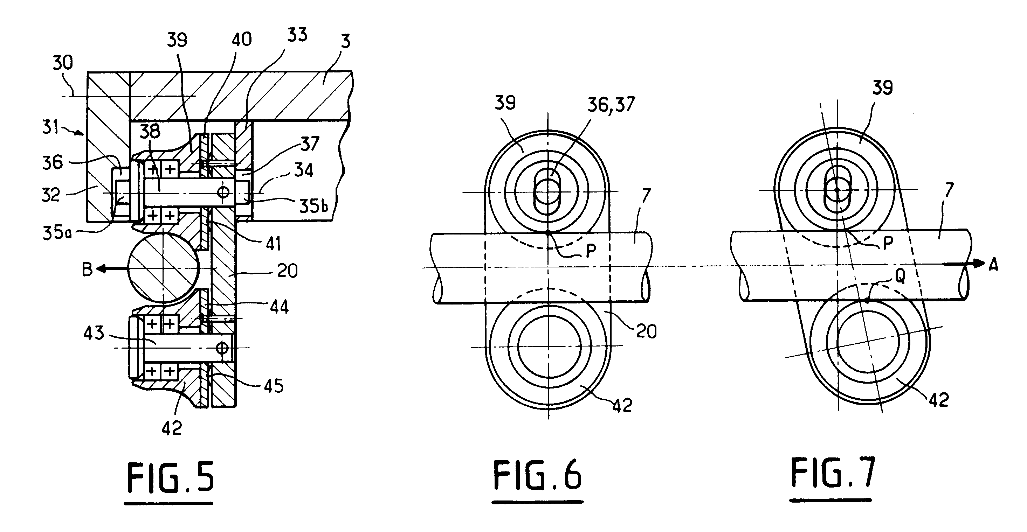

Une dernière variante de réalisation des moyens d'accouplement palette-courroie est illustrée par les figures 5, 6 et 7. Il s'agit de moyens semblables à ceux de la figure 4, c'est-à-dire comportant un levier pendulaire 20. Le plateau 3 reçoit, par des vis 30, un boîtier 31 qui forme, par ses parois 32 et 33, une chape d'articulation du levier 20. L'axe 34 d'articulation est matérialisé par des tourillons 35a et 35b qui sont logés dans des lumières 36 et 37 de la chape de sorte que le levier 20 possède, outre la possibilité d'osciller dans la chape, une liberté en translation verticale. Les tourillons 35a et 35b forment l'extrémité d'un axe 38, solidaire du levier 20 et sur lequel un galet 39 est monté tourillonnant. Une garniture de friction 40 est placée entre le galet 39 et le levier 20. Une lame de ressort 41 a pour fonction d'engendrer un effet de placage de cette garniture 40, fixe en rotation sur le levier 20, contre le flanc du galet et par conséquent un couple résistant permanent sur le galet. Le galet ne peut donc tourner que s'il subit un couple d'entraînement surmontant ce couple résistant. Un second galet 42 est monté de la même manière à l'extrémité libre du levier pendulaire 20 (sur un axe 43 avec garniture de friction 44 et ressort 45), la distance, séparant les deux galets étant légèrement supérieure au diamètre du brin 7 de courroie qui est logé entre eux. Le profil de la surface extérieure des galets 39 et 42 est tel qu'il ne s'oppose pas à l'échappement latéral de la courroie (direction B sur la figure 5). les figures 6 et 7 sont des schémas de face du levier 20. A la figure 6, la courroie 7 est immobile et le levier 20 repose sur la courroie par le point inférieur P du galet 39.

Lorsque la courroie est animée du mouvement A, le frottement du brin 7 sur le galet 39 fait tourner le levier 20 comme dans le cas de la figure 4. Le galet inférieur 42 est alors porté au contact du brin de courroie au point Q et la palette est en prise avec la courroie. Si la palette est immobilisée l'effort de la courroie sur les galets surmonte le couple de friction qui existe entre 40 et 44 et ces galets peuvent tourner autour de leur axe respectif tant que la palette est maintenue immobile.

Le couple résistant des galets sur le levier peut être exercé par un champ magnétique évitant la friction de deux faces en opposition.

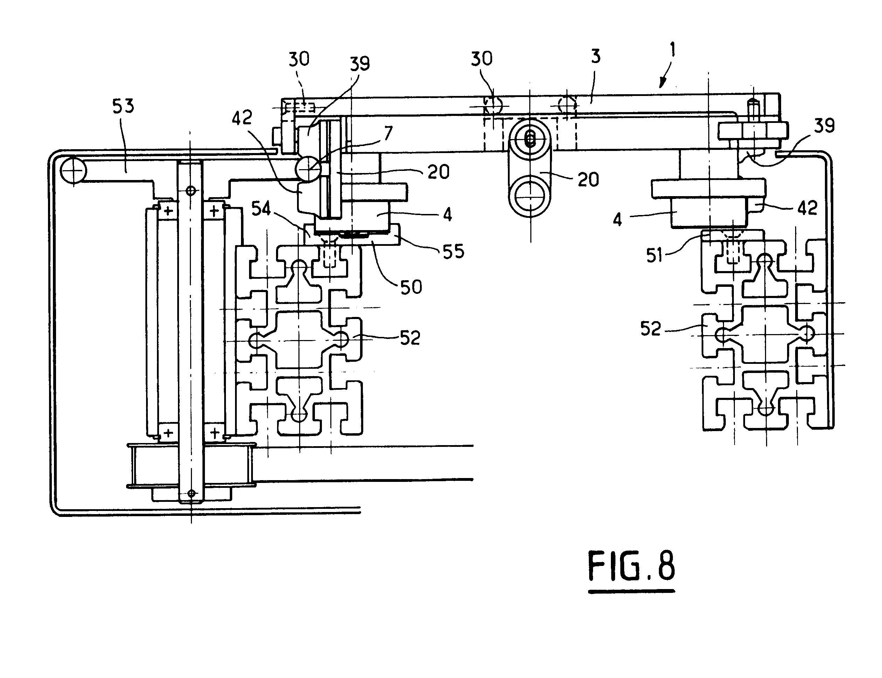

Les figures 8, 9 et 10 illustrent par des vues partielles le dispositif dans son ensemble, c'est-à-dire la palette placée sur une structure fixe supportant la piste de roulement de la palette, les organes fixes de guidage de celles-ci et les supports de courroie et de leurs moteurs d'entraînement.

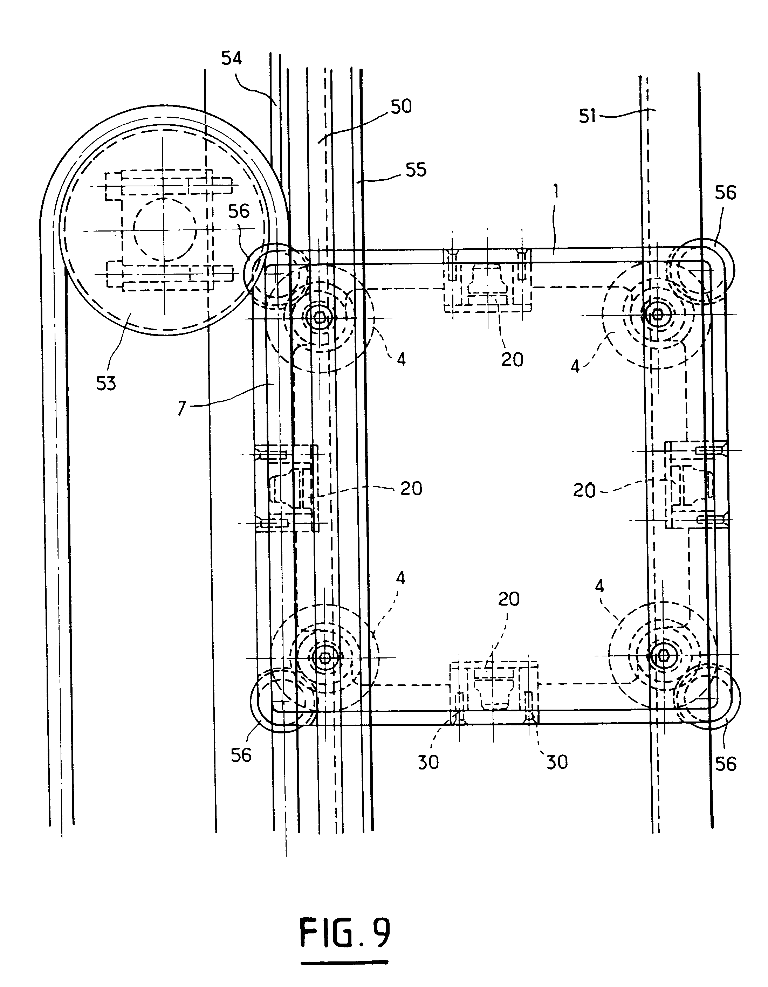

Aux figures 8 et 9 qui sont respectivement une coupe partielle transversale du dispositif et une vue de dessus partielle, on voit que les chemins de roulement 50, 51 de la palette 1 sont portés par les longerons profilés 52 qui sont eux-mêmes solidaires de piètements non représentés et entretoisés pour constituer (de manière modulaire ou non) un bâti. Les profilés 52 forment également le support pour des poulies 53 de renvoi des courroies sans fin qui présentent leur brin moteur 7 au voisinage de celui des chemins de roulement 50 ou 51, qui est bordé d'un rail de guidage unilatéral de la palette. Ce rail est constitué par des rebords 54, 55 du chemin 50 qui encadrent les supports des organes de roulement 4 qui forment des doigts de guidage.

Dans le cas d'un roulement latéral de la palette, le rail de guidage peut être remplacé par deux guides opposés comprenant chacun un seul rebord.

Les palettes 1 comportent à chacun de leur angle un galet 56 à axe vertical qui déborde des côtés de l'angle et qui est en matériau amortisseur tel qu'un élastomère.

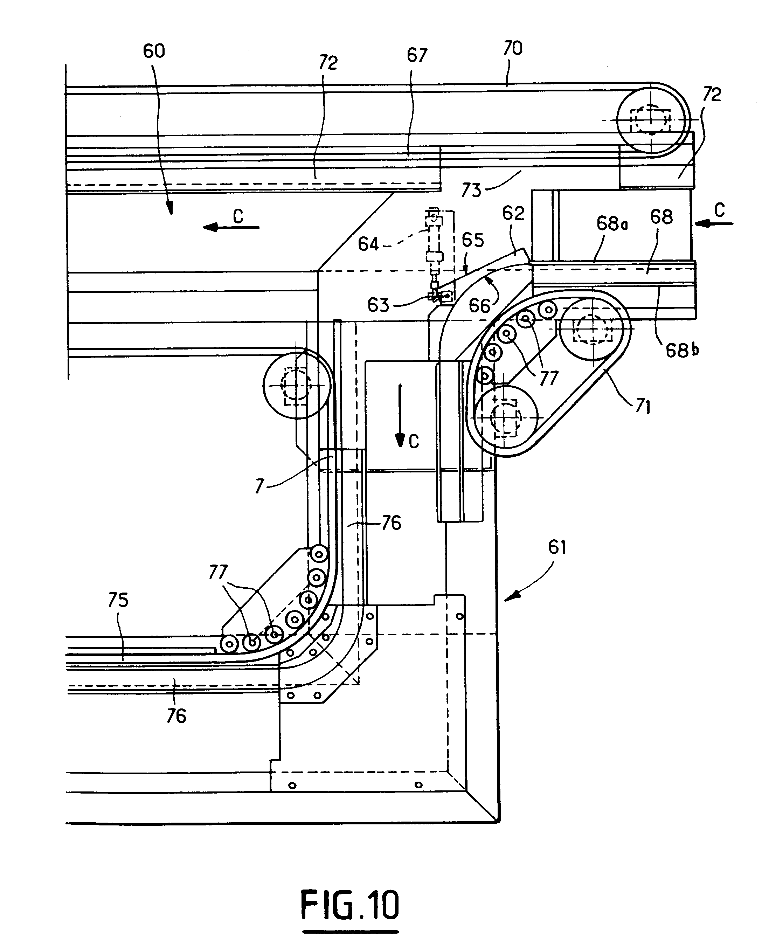

A la figure 10 on a représenté une partie du dispositif de l'invention qui comporte un embranchement entre une voie de circulation principale référencée 60 et une voie de dérivation 61, le sens de circulation des palettes étant noté C.

Une palette abordant cet embranchement par le côté droit de la figure est d'abord prise en charge par le brin 67 de la courroie 70 et orientée dans la voie 60 ou la voie 61 selon la position d'une aiguille de direction 62. Cette aiguille est articulée en 63 par l'une de ses extrémités autour d'un axe vertical perpendiculaire à la piste et est manoeuvrée autour de cet axe au moyen d'un vérin 64. Elle possède un côté rectiligne 65 et un côté curviligne 66. Dans sa position de la figure, le côté curviligne 66 est actif et forme la continuité du rebord 68a du rail 68. Une courroie 71 est située à l'intérieur de la courbe que définit le bord 66 de l'aiguille 62.

La palette, entraînée par le brin de courroie 67, coopère également avec son côté latéral opposé à celui proche du brin 67 avec la courroie 71. Les organes 4 de roulement situés de ce même côté sont contraints alors de suivre la courbe 66 tandis que le rail de guidage 72 voisin du brin 67 possède une interruption 73 pour laisser échapper les organes de guidage de la palette avec lesquels il coopère.

Dans le même temps le levier d'embrayage de la palette à la courroie échappe à celle-ci. La palette est donc conduite dans la voie 61 en direction du rail 74 puis est prise en charge par une courroie 75 et un rail 76 qui la guide tout au long de la voie 61 tant dans ses parties courbes que dans ses parties rectilignes.

Au cas où on souhaite orienter la palette dans la voie 60, par le vérin 64 on rabat l'aiguille 62 en direction de la courroie 71 de sorte que son côté rectiligne 65 vienne en prolongement du rebord 68b du rail 68. La palette reste en prise avec le brin 67 même si par son bord latéral opposé elle coopère un bref instant avec la courroie 71. Le rail 68 prolongé par le rebord 65 de l'aiguille guide la palette lors de son passage de la zone 73 dépourvue de rail du côté du brin de courroie 67. La palette continue ensuite dans la voie 60 guidée par le rail 72.

Si maintenant on imagine que les palettes circulent dans un sens opposé à celui C indiqué, l'aiguille 62 sera une aiguille folle sans vérin 64. Une palette arrivant de la voie 61 prise en charge par la courroie 71 repoussera l'aiguille 67 dans sa position représentée (si elle n'y était pas déjà). Une palette arrivant de la voie 60 repoussera l'aiguille folle 62 en s'appuyant sur son côté rectiligne 65 et pourra poursuivre son trajet en direction de la droite de la figure.

On aura remarqué sur cette figure 10 que les brins de courroie actifs sont, dans les courbes, situés à l'intérieur de celles-ci et déviés au moyen d'une pluralité de galets 77 consécutifs disposés le long d'une courbe qui n'est pas un arc de cercle pour correspondre à la trajectoire non circulaire des leviers 20 d'attelage de chaque palette aux courroies. En effet il est plus simple de prévoir des rails courbes circulaires qui, parcourus par les organes 4 encadrant les leviers 22 déterminent la géométrie non circulaire de la trajectoire de ces leviers.

## Revendications

1. Dispositif pour déplacer des pièces d'un poste à un autre le long d'une ligne de traitement de ces pièces, comportant une piste (2) desservant les postes de la ligne, une pluralité de palettes (1) roulant sur la piste (2), la piste et les palettes comportant des moyens de guidage (4, 54, 55) coopérant les uns avec les autres, la piste étant bordée par au moins une courroie (7) d'entraînement marginale, caractérisé en ce que la palette (1) comporte sur l'un au moins de ses côtés un organe de son attelage à la courroie (7) comportant au moins un élément pesant (8, 18, 20) reposant par gravité sur la courroie (7) de sorte qu'un déplacement de cette courroie (7) par rapport à la palette (1) engendre par friction un mouvement de cet élément (8, 18, 20) pesant déclenchant l'embrayage de l'organe d'attelage de la palette (1) à la courroie (7).

2. Dispositif selon la revendication 1, caractérisé en ce que l'organe d'attelage comporte à l'aplomb de l'élément pesant une surface (10) solidaire de la palette sur laquelle glisse la courroie, l'élément pesant constituant un élément (8) de serrage autobloquant de la courroie (7) contre la surface (10) solidaire de la palette (1).

3. Dispositif selon la revendication 2, caractérisé en ce que l'élément pesant est constitué par un patin de serrage (8) reposant sur la courroie (7) par une surface inférieure et comportant, opposée à cette surface, une pente (13) inclinée vers le bas dans le sens de déplacement de la courroie (7) coopérant avec une butée (14) fixe de la palette (1).

4. Dispositif selon la revendication 2, caractérisé en ce que l'élément pesant est constitué par une came (18) de serrage circulaire articulée de manière excentrée sur la palette (1) autour d'un axe (19) parallèle à la surface (10) de glissement de la courroie.

5. Dispositif selon l'une quelconque des revendications 2 à 4, caractérisé en ce que la palette (1) comporte par côté, deux éléments pesants (8, 18) disposés en opposition de manière à provoquer l'embrayage de l'attelage de la palette (1) à la courroie (7) dans les deux sens de déplacement de cette dernière.

6. Dispositif selon la revendication 1, caractérisé en ce que l'organe d'attelage est constitué par un levier pendulaire (20) articulé à la palette (1) au-dessus de la courroie (7) avec un jeu dans le sens de la longueur du levier (20), ce dernier comportant, à l'opposé de son articulation, une gorge (23) de passage de la courroie dont la face supérieure (24) repose sur cette courroie (7) et dont la face inférieure (25) forme came de blocage du levier sur la courroie quand celle-ci provoque par friction sur la face supérieure le pivotement du levier (20).

7. Dispositif selon l'une quelconque des revendications 2 à 6, caractérisé en ce qu'il comporte des organes de débrayage de la liaison courroie (7) - palette (1) comprenant un poussoir (17, 26, 27) en appui sur chaque élément (8, 18) pesant, monté à coulissement dans la palette parallèlement à la direction de la courroie et faisant saillie au-delà du bord avant de la palette (1), dans son sens de circulation quand l'élément pesant (8, 18) est maintenu déplacé par la courroie (7).

8. Dispositif selon la revendication 7, caractérisé en ce que chaque palette (1) comporte un volet extérieur (28, 29) au droit de chaque extrémité poussoir (17, 26, 27) formant palette d'actionnement de celui-ci.

9. Dispositif selon la revendication 6, caractérisé en ce que la gorge (23) de passage de la courroie est délimitée par la surface extérieure de deux galets (39, 42) montés à rotation freinée sur le levier pendulaire (20).

10. Dispositif selon l'une quelconque des revendications 6 à 9, caractérisé en ce que les moyens de guidage solidaires de la piste comportent un rail (54,55) unique situé du même côté de la piste (5, 6, 50, 51) que la courroie (7) d'entraînement, chaque palette (1) comportant deux doigts (4) de guidage coopérant avec le rail entre lesquels le levier pendulaire ( 20 ) est disposé.

11. Dispositif selon la revendication 10, caractérisé en ce que dans les parties courbes de la piste la courroie (7) est située le long du bord interne de la courbe.

12. Dispositif selon la revendication 6, caractérisé en ce que la palette (1) est sensiblement carrée et comporte un levier pendulaire (20) au centre de chacun de ses côtés.

13. Dispositif selon l'une quelconque des revendications précédentes, caractérisé en ce que les angles de la palette (1) sont équipés de galets (56) amortisseurs de chocs à axes verticaux.
